# EUROPEAN PATENT APPLICATION

(11) **EP 1 536 322 A2**
(43) Date of publication of application: **01.06.2005**
(21) Application number: 03025741.4
(22) Date of filing: 10.11.2003
(51) Int. Cl.: G06F 9/44

(54) **System and method for developing target application on target system in cross development environment**

(30) Priority: 04.09.2003 KR 2003061709
(71) Applicant: Electronics and Telecommunications Research Institute, Taejon 305-350 (KR)
(72) Inventor: Woo, Duk Kyun, Seo-Gu, Taejon (KR); Woo, Kyoung Tae, Seo-Gu, Taejon (KR); Lim, Chae Deok, Yusong-Gu Taejon (KR); Park, Seong Min, Yusong-Gu Taejon (KR); Kim, Heung Nam, Yusong-Gu Taejon (KR)
(74) Representative: Betten & Resch

(57) **Abstract**

Disclosed is a system for developing a target application on target system in a cross development environment having a host system and a target system, the development system including: the target system having: a storage device; an input device; an output device; a source editing unit for creating, opening, editing, and saving a source program to the storage device; and a project management client unit for performing a function of creating, opening, modifying, building, executing, and closing a project, and controlling data transmission/reception and information storage; the host system having: a storage device; a cross compiling unit for building (cross-compiling and linking) the source program such that an executable program is created to be saved to the storage device, and transmitting a message of a building result to the project management server unit; and a project management server unit for storing the project information and the source program in the storage device of the host system, and performing a build function of the source program.

## Description

### BACKGROUND OF THE INVENTION

### Field of the Invention

The present invention relates to a system and method for developing a target application on target system in a cross development environment, and more particularly, to a system and method that user can develop an application of the target system directly on target system in a cross development environment having a host system and a target system.

### Discussion of the Related Art

A cross development environment represents an environment in which an application program of a target system can be developed in a host system in a network interface state of the host system and the target system, and the host system represents a general purposed computer system, such as a desktop PC or a workstation, and the target system represents an embedded system in which a special function is performed unlike the host system.

For example, the computer system is embedded into a television set (TV) and a refrigerator for home to perform a function of a conventional TV and refrigerator and at the same time, to perform an internet interface function, etc. through a network.

The embedded system represents all instruments having the computer system embedded therein including instruments such as a portable phone, a portable digital assistant (PDA) and a web pad as well as electronic home products such as TV, refrigerator, etc.

The embedded system can perform a function of an operation and data processing that can be performed by the computer system, by using a central processing unit (CPU) and a memory. However, since a main object of the embedded system is not a fast operation and a large amount of data processing, even though the embedded system lacks in performance and storage capacity in comparison to the host system, a low-priced CPU and memory is used non-problematically. Because of the above-stated reasons, the application run in the embedded system is developed in the host system having excellent performance rather than the embedded system.

An embedded application developer edits a source program of the application in the host system, and cross-compiles the edited source program to an executable program. Additionally, the executable program is downloaded into the target system for execution, and the developer repeats such a procedure and completes the development of the embedded application.

In such a conventional cross development environment, all developments are performed in the host system, and the target system is positioned in a fixed state closely to the host system so as to check an execution result.

However, in the target system having mobility such as the PDA, the conventional cross development environment can result in increase of a development time and inconvenience of the development environment in the development procedure of a mobility-related application program.

For example, assuming the development of the PDA application for displaying position information in real time on a road, the application is mostly developed in the host system at office, and then for a real circumstance test, the PDA including the developed application is moved on the road and an execution error can occur while testing. At this time, in worst case, the PDA should be again moved to the office to debug the application, and then again moved to the road for test. This circumstance can cause a terrible waste in a development time of the application, and inconvenience of the development environment in which the developer cannot just debug the application for the execution error under movement.

### SUMMARY OF THE INVENTION

Accordingly, the present invention is directed to a system and method for developing a target application on target system in a cross development environment that substantially obviates one or more problems due to limitations and disadvantages of the related technology.

An object of the present invention is to provide a system and method for developing a target application on target system in a cross development environment in which an application developer can directly develop an application of the target system such as a PDA on target system.

Another object of the present invention is to provide a system and method for developing a target application on target system in a cross development environment in which, in case a program error is generated in a procedure where the executable program developed in a host system is tested while a target system such as a PDA is moved, the application developer can directly edit, compile and execute the source program without considering the host system.

The object of the present invention can be achieved by providing a device for editing the source program in the target system to edit the source program in the target system, and transmitting the edited source program to the host system to be compiled using a cross compiler of the host system, and again transmitting the compiled executable program to the target system for execution in the target system.

The reason why the source program edited in the target system is compiled in the host system, not the target system, is that since the target system has a slow speed of CPU and a short of memory capacity in comparison with the host system, if a compile environment is maintained in the target system, a compiling time is increased and a wasted memory of the target system is increased. Undoubtedly, the compiling way in the host system can also cause a communication overhead between the host system and the target system, but since an overhead for a resource and the compiling time in the target system is larger than the communication overhead, it is more effective to maintain the compile environment in the host system.

Additional advantages, objects, and features of the invention will be set forth in part in the description which follows and in part will become apparent to those having ordinary skill in the technology upon examination of the following or may be learned from practice of the invention. The objectives and other advantages of the invention may be realized and attained by the structure particularly pointed out in the written description and claims hereof as well as the appended drawings.
To achieve these objects and other advantages and in accordance with the purpose of the invention, as embodied and broadly described herein, there is provided a system for developing a target application on target system in a cross development environment having a host system and a target system, the development system including: the target system having: a storage device; an input device; an output device; a source editing unit for creating, opening, editing, and saving a source program to the storage device; and a project management client unit for performing a function of creating, opening, modifying, building, executing, and closing a project in association with the input device, the output device and the host system, and controlling data transmission/reception and information storage with respect to project information; the host system having: a storage device; a cross compiling unit for building (cross-compiling and linking) the source program such that an executable program which can be executed at the target system is created to be saved to the storage device, and transmitting a message of a building result to the project management server unit; and a project management server unit for storing the project information and the source program in the storage device of the host system in association with the target system, and performing a build function of the source program in association with the cross compiling unit, whereby the application developer can develop the application in the target system.
As another aspect of the present invention, there is provided a method for developing a target application on target system in a cross development environment having a host system and a target system, the developing method including: creating a project or opening a given project in the target system; modifying the created or opened project; building the modified project in the host system; executing the built executable program in the target system; and closing the project.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating a target application development system based on target system according to a preferred embodiment of the present invention;

FIG. 2 is a flow chart illustrating a project-based application development cycle according to a preferred embodiment of the present invention;

FIG. 3 is a flow chart illustrating a project creating method at a project-based application development cycle according to a preferred embodiment of the present invention;

FIG. 4 is a flow chart illustrating a project opening method at a project-based application development cycle according to a preferred embodiment of the present invention;

FIG. 5 is a flow chart illustrating a project building method at a project-based application development cycle according to a preferred embodiment of the present invention; and

FIG. 6 is a flow chart illustrating a project closing method at a project-based application development cycle according to a preferred embodiment of the present invention.

### DETAILED DESCRIPTION OF THE INVENTION

Reference will now be prepared in detail to the preferred embodiments of the present invention, examples of which are illustrated in the accompanying drawings. Wherever possible, the same reference numbers will be used throughout the drawings to refer to the same or like parts.

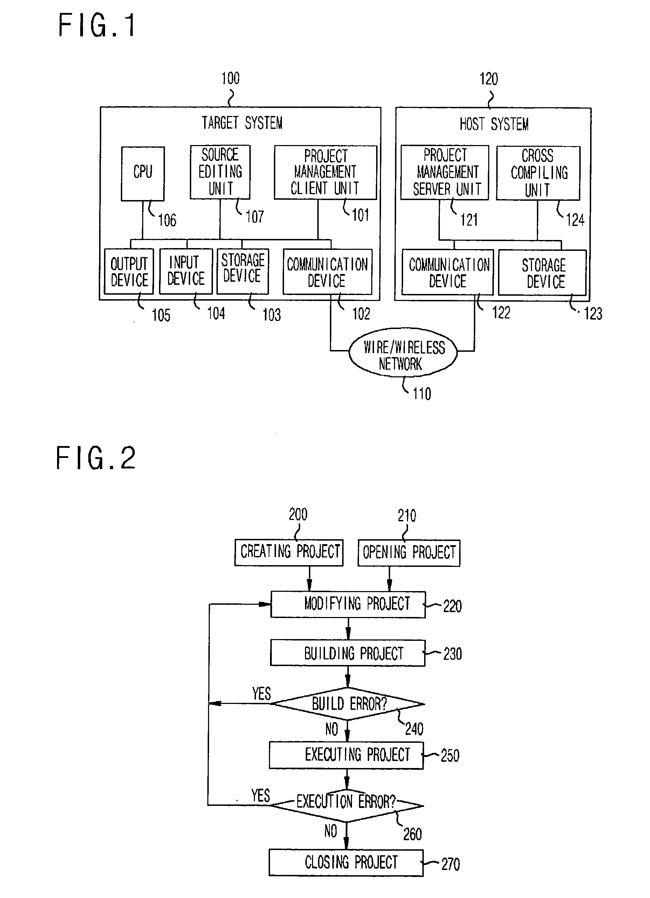

FIG. 1 is a block diagram illustrating a target application development system based on target system according to a preferred embodiment of the present invention.

Referring to FIG. 1, the present invention discloses a system for editing a source program in a target system 100 and building the edited source program in a host system 120 to enable the built executable program to be executed in the target system 100.

The target system 100 includes a project management client unit 101, a source editing unit 107, a central processing unit (CPU) 106, a communication device 102, a storage device 103, an input device 104 and an output device 105, and the host system 120 includes a project management server unit 121, a cross compiling unit 124, a communication device 122 and a storage device 123. And, the target system 100 and the host system 120 are connected to each other through a wire/wireless network 110.

In order to develop the application which can be performed by the CPU 106 of the target system 100, an application developer uses the input device 104 and the output device 105 such that a required procedure is performed for the development of the application, such as source program edition, build, execution, etc.

The source program edited in the target system 100 is transmitted to the host system 120 for building to create the executable program, and the executable program of the target system 100 is transmitted to the host system 120 for execution. At this time, the application developer can check an execution result of the edited program through the output device 105 of the target system 100.

The cross development system disclosed in the present invention provides a development environment in which the development procedure of edition/building/execution of the source program can be performed on basis of a project.

The application developer uses the input device 104 and the output device 105 of the target system 100 such that a project creation, opening, modifying, building and execution, etc. are performed. Project-related functions are described in detail in FIG. 2.

As described above, the project management client unit 101 of the target system 100 and the project management server unit 121 of the host system 120 are core modules in the project-based development environment.

The target system 100 provides the application developer with a source program editing function at the source editing unit 107. The application developer inputs a command of creation, opening, edition and saving, etc. of the source program through the input device 104 of the target system 100, and the inputted information is transmitted to the source editing unit 107 so that contents required by the developer are performed to be displayed on the output device 105 of the target system 100.

For example, if the developer does, after editing the source program, order a source program saving command through the input device 104, the source editing unit 107 does, according to the command, save a currently-edited source program to the storage device 103 of the target system 100. In case of successful saving, the resultant message is displayed on the output device 105 of the target system 100, and the developer acknowledges the successful saving from the displayed resultant message.

The project management client unit 101 of the target system 100 associates with the project management server unit 121 of the host system 120 to provide the application developer with a project management function. The application developer inputs a project-related command through the input device 104 of the target system 100, and the inputted information is transmitted to the project management client unit 101 so that the contents required by the developer are performed, and their results are transmitted to the output device 105 of the target system 100.

For example, the developer orders a project build command through the input device 104, the project management client unit 101 is ordered by a corresponding command to transmit project information to the project management server unit 121 of the host system 120, and to request a build.

After the project management server unit 121 of the host system 120 to receive a build request from the target system 100 performs the build, the build result is transmitted to the project management client unit 101. Additionally, the project management client unit 101 outputs the build result through the output device 105 of the target system 100 to inform the developer of the build result.

In order to associate with the project management server unit 121 of the host system 120, the project management client unit 101 of the target system 100 performs project-related data transmission/reception. The project management client unit 101 controls the communication device 102 of the target system 100 to transmit data to the project management server unit 121 of the host system 120, and receives the transmitted data from the project management server unit 121.

The communication device 102 of the target system 100 transmits or receives data to or from the communication device 122 of the host system 120 through the wire/wireless network 110.

The project management server unit 121 of the host system 120 does, in the storage apparatus 123, save source program and the project information modified at the target system 100 and transmitted to the host system 120, and transmits related information to the cross compiling unit 124 to request the build for the source program.

The cross compiling unit 124 of the host system 120, builds (cross-compiles and links) the source program to create the executable program, which can be executed by the CPU (106) of the target system 100, and then saves the created executable program to the storage device 123, and transmits a message of the building result to the project management server unit 121.

The project management server unit 121 transmits the message of the building result transmitted from the cross compiling unit 124 and the executable program saved to the storage device 123, to the project management client unit 101 of the target system 100 through the communication device 122.

FIG. 2 is a flow chart illustrating the project-based application development cycle according to a preferred embodiment of the present invention. On basis of the project-based cross development system of FIG. 1, the application developer develops the application at the target system 100 as illustrated in FIG. 2.

The developer orders the command through the input device 104 of the target system 100 in every step of FIG. 2, and the project management client unit 101 and the source editing unit 107 perform the command, and output their results through the output device 105 of the target system 100.

In case the application development is first commenced, the source program developer creates a project in the project creating step 200 and follows a project modifying step 220. However, in case an earlier-done development is continued, the application developer opens an earlier-processed project in the project opening step 210, and follows the project modifying step 220.

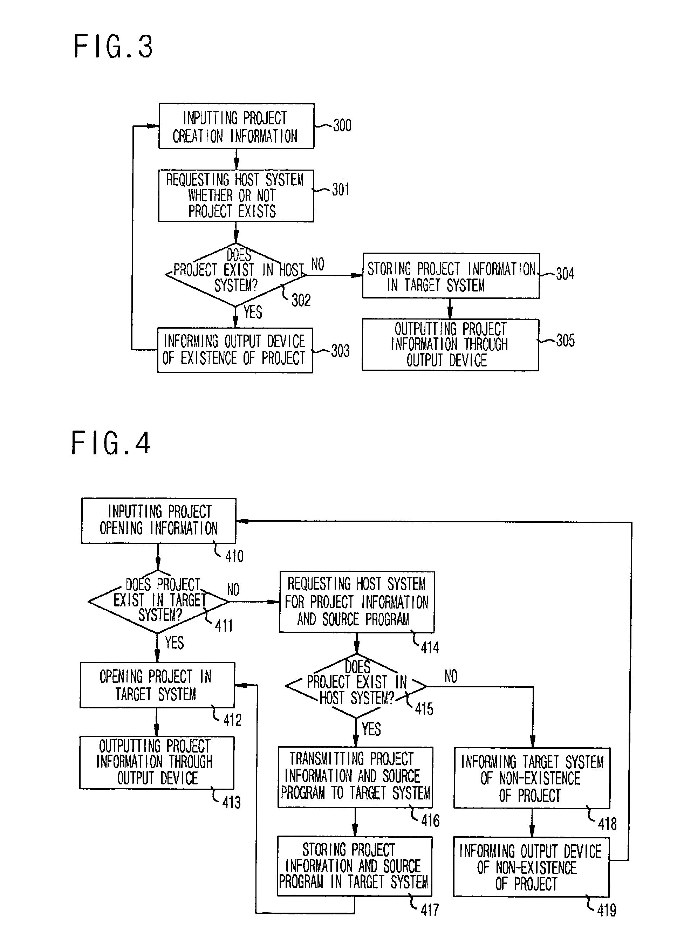

A more detailed content for the project creating step 200 is described in FIG. 3, and a more detailed content for the project opening step 210 is described in FIG. 4.

The project modifying step 220 is comprised of a project information modifying and a source program editing. The project information modifying represents modifying of source information, build information and execution information included in the project.

In the project information modifying, the source information modifying is to perform adding/deleting, etc. of a source file for the project information, and the build information modifying is to perform modifying of compile or link option, adding/deleting of a header file directory, adding/deleting of a library file directory, etc. The execution information is to perform modifying of an execution environment variable, an execution argument, etc.

The application developer inputs a modification command of the project information through the input device 104 of the target system 100, and the project management client unit 101 outputs the project information through the output device 105 of the target system 100. After the developer inputs the modification command through the input device 104 while seeing the project information of the output device 105, the project management client unit 101 processes the modification command and again displays the result on the output device 105. By repeating the above procedure, the application developer modifies the project information.

The source program modifying of the project modifying step 220 is comprised of a source program creation, edition and saving, etc. The source program creation is to create a source program, the source program edition is to edit the source program, and the source program saving is to save the edited source program to the storage device 103.

The application developer inputs a creation command of the source program through the input device 104 of the target system 100, and then the creation command is transmitted to the source editing unit 107, and then the source editing unit 107 displays information on the output device 105 so that the application developer can edit the source program.

The developer inputs a command related with edition of the source program through the input device 104 while seeing on the output device 105 of the target system 100, and the source editing unit 107 ordered by the command processes the inputted command, and outputs the result through the output device 105. By repeating the above procedure, the developer edits the source program. After the source program is completely edited, the developer inputs a saving command of the source program through the input device 104, and the source editing unit 107 saves the currently-edited source program to the storage device 103.

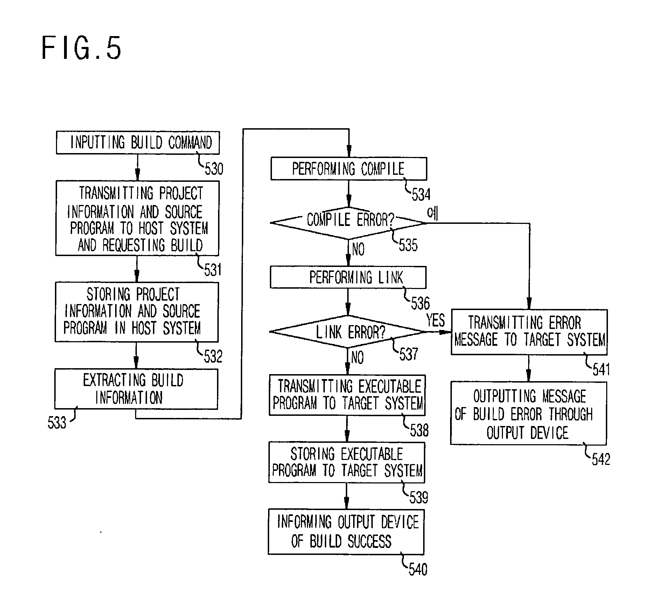

If the project modifying step 220 is ended, the developer follows the project building step 230 to perform the project build. A detailed description for the project building step 230 is shown in FIG. 5. If a build error is generated as a result of the project build, the project modifying step 220 is again followed to modify the project and perform the project build. In case the build succeeds, the developer follows a project executing step 250.

In case the project building step 230 is succeeded, the executable program is saved to the storage device 103 of the target system 100. In order to execute the executable program of the storage device 103, the developer orders an execution command of the project through the input device 104, and the project management client unit 101 ordered by the command retrieves the executable program of the storage device 103 to execute the program. The execution result of the program is displayed on the output device 105, and the developer checks the output result.

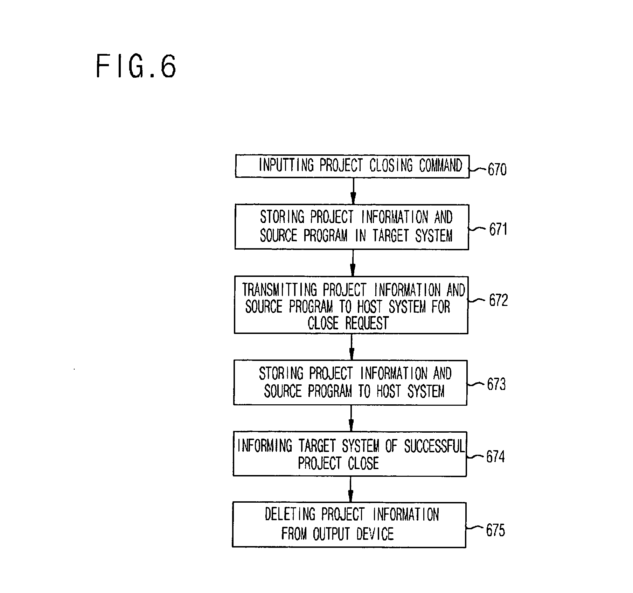

If the execution error of the program is generated in the step 250, the project modifying step 220 is again followed to modify the project, and perform the project build and execution. In case the execution is succeeded in the step 250, the project closing step 270 is followed to close the currently-processed project. A detailed content for the project closing step 270 is shown in FIG. 6.

FIG. 3 is a flow chart illustrating a detailed method for the project creating step 200 of FIG. 2.

Referring to the drawings, if the developer inputs a creation command of the project through the input device 104 of the target system 100 so as to create the project, the project management client unit 101 outputs an environment to which project creation information can be inputted, through the output device 105, and the developer inputs the project creation information comprised of a project name and a project directory, through the input device 104 while seeing the content of the output device 105 (step 300).

After the project creation information is inputted through the input device 104 of the target system 100, the project management client unit 101 requests whether or not the project intended to be created on basis of the project name and the project directory received from the input device 104 exists in the host system 120 (step 301).

The project management client unit 101 prepares the project name, the project directory and the project existence request command, which are intended to be created, as a message, and then transmits the prepared message to the host system 120 through the communication device 102.

The project management server unit 121 of the host system 120 analyzes the message received from the target system 100 to extract the project name and the project directory, and on basis of the above information, and then checks whether a corresponding project exists in the storage device 123 of the host system (step 302).

The project management server unit 121 prepares a message including project existence information and transmits the prepared message to the project management client unit 101 of the target system 100 through the communication device 122.

The project management client unit 101 of the target system 100 to receive the message analyzes message information, and if it is determined that the project exists in the host system 120, the project management client unit 101 informs the output device 105 of the target system 100 that the project exists in the host system 120 (step 303).

After the developer checks existence of the project through the output device 105, the project creation information inputting step (300) is again followed to change the project creation information and then proceed with a next project creation.

If it is determined that the project does not exist in the host system 120 in the step 302, the project management client unit 101 prepares and stores an empty project including only project name and directory information in the storage device 103 of the target system 100 on basis of the project name and the project directory, and informs the output device 105 of the target system 100 that the project is created and outputs the created project information (steps 304 to 305).

FIG. 4 is a flow chart illustrating a method for the project opening step 210 of FIG. 2.

Referring to the drawings, the application developer inputs an opening command through the input device 104 of the target system 100 so as to open the project, and the project management client unit 101 outputs an environment to which project opening information can be inputted, through the output device 105, and the developer inputs a project path name intended to be opened while seeing the content of the output device 105, to the input device 104 (step 410).

Herein, the project path name represents a name for distinguishing the projects stored in the storage device 123 of the host system 120 or the storage device 103 of the target system 100.

The project path name is inputted, and the project management client unit 101 checks whether the project corresponding to the project path name inputted through the input device 104 exists in the storage device 103 (step 411).

If a project with the project path name inputted through the input device 104 exists in the storage device 103 in the step 411, the project management client unit 101 reads the project existing in the storage device 103, and outputs the project information of the read project through the output device 105 (steps 412 to 413).

To the contrary, if a project with the inputted project path name does not exist in the storage device 103, the project management client unit 101 bundles the project path name, the project information and the source program request command with a message, and transmits the message to the project management server unit 121 of the host system 120 through the communication device 102 (step 414).

The project management server unit 121 analyzes the message transmitted from the target system 100 to extract the project path name, and checks whether the project of a corresponding path name exists in the storage device 123 of the host system 120 (step 415).

If a project with the project path name exists in the storage device 123 of the host system 120 in the step 415, the project management server unit reads the project from the storage device 123 and reads the source program from the source information included in the project information, and then transmits the project information and the source program as a message to the target system 100 (step 416).

The project management client unit 101 of the target system 100 analyzes the message transmitted from the host system 120, and stores the project information and the source program included in the message in the storage device 103 of the target system 100, and in the target system, the project opening step 412 is followed to proceed with the project opening step (step 417).

To the contrary, if a project with the project path name does not exist in the storage device 123 of the host system 120 in the step 415, the project management server unit 121 bundles non-existence of the corresponding project in the host system 120 with a message, and transmits the message to the project management client unit 101 of the target system 100 through the communication device 122, and displays non-existence of the project on the output device 105 (steps 418 to 419).

After the developer checks the non-existence of the project from the output device 105, he again follows the project opening information inputting step 410 so that other project path name is inputted to proceed with a project opening procedure.

FIG. 5 is a flow chart illustrating a method for the project building step 230 of FIG. 2 according to the present invention.

Referring to the drawings, the application developer inputs the build command through the input device 104 of the target system 100 (step 530).

The project management client unit 101 ordered by the command bundles the project information, the source program and the build command under current processing with a message, and transmits the message to the host system 120 through the communication device 102, and then request a build (step 531).

The project management server unit 121 of the host system 120 analyzes the message transmitted from the target system 100 such that the project information and the source program are extracted to be stored in the storage device 123 of the host system 120, and extracts the build information necessary for the source program build from the project information (steps 532 to 533).

The build information contains compile options, link options, header files, library files directories, etc. The extracted build information and source program are transmitted to the cross compiling unit 124.

The cross compiling unit 124 performs the cross compiling on basis of the build information such as the compile options, the header file directories, etc. and at the same time, checks whether the compile error is generated (steps 534 to 535).

If the compile error is generated in the step 535, the cross compiling unit 124 of the host system 120 prepares the content of the compile error as a message, and transmits the prepared message to the project management client unit 101 of the target system 100 through the communication device 122, and the project management client unit 101 extracts the error content to output the extracted error content through the output device 105 (steps 541 to 542).

To the contrary, in case the cross compile is succeeded as a result of checking the error of the cross compile in the step 535, an object program corresponding to each of the source programs is created to be stored in the storage device 123 of the host system 120, a cross link is performed on basis of link information such as the link options, the library file directories, etc. of the build information, and it is checked whether the link error is generated in the course of performing the link (steps 536 to 537).

Herein, "link" represents a procedure in which the compiled object programs are linked to generate one executable program in the storage device 123.

In case the link error is generated as a result of checking in the step 537, the error content is prepared as a message, and transmits the prepared message to the project management client unit 101 of the target system 100, and the project management client unit 101 extracts the error content to output the extracted error content through the output device (steps 541 to 542).

In case the link is succeeded as a result of checking in the step 537, the executable program stored in the storage device 123 of the host system 120 is prepared as the message to be transmitted to the project management client unit 101 of the target system 100, and the executable program is extracted from the transmitted message to be stored in the storage device 103 of the target system 100, and then the output device 105 is informed that the build is succeeded (steps 538 to 540).

FIG. 6 is a flow chart illustrating the project closing step 270 according to a preferred embodiment of the present invention.

Referring to the drawings, the application developer inputs a project closing command through the input device 104 of the target system 100 (step 670), and the project management client unit 101 ordered by the command stores the project information and the source program information under processing in the storage device 103 (step 671).

Additionally, the project management client unit 101 bundles the project information, the source program and the closing command with a message, and transmits the message to the project management server unit 121 of the host system 120 through the communication device 102 (step 672).

The project management server unit 121 of the host system 120 having the message received extracts the project information and the source program from the message transmitted from the target system 100, and stores the extracted information in the storage device 123 (step 673).

Additionally, a storage success content is prepared as the message to be transmitted to the project management client unit 101 of the target system 100, and the project management client unit 101 outputs the prepared success message through the output device 105 (step 674).

The project management client unit 101 to receive the storage success message deletes all the project information being currently outputted from the output device 105, and returns to a screen state earlier than the project creation or opening (step 675).

As described above, according to the present invention, since the source program is edited in the target system and the source program build is performed in the host system, the target system does not need to be always fixed close to the host system.

Further, since the build of the source program is performed in the host system, not the target system, a build time of the source program can be decreased and a memory usage of the target system can be reduced more than the case in which the build environment is provided in the target system.

Furthermore, when a mobility-related application program is developed in the target system such as the mobile PDA, in case an execution error occurs while the target system moves for test, since the source program can be directly edited for test in the target system, the developer can be provided with development convenience, and a development time can be reduced.
According to an embodiment, disclosed is a system for developing a target application on target system in a cross development environment having a host system and a target system, the development system including: the target system having: a storage device; an input device; an output device; a source editing unit for creating, opening, editing, and saving a source program to the storage device; and a project management client unit for performing a function of creating, opening, modifying, building, executing, and closing a project, and controlling data transmission/reception and information storage; the host system having: a storage device; a cross compiling unit for building (cross-compiling and linking) the source program such that an executable program is created to be saved to the storage device, and transmitting a message of a building result to the project management server unit; and a project management server unit for storing the project information and the source program in the storage device of the host system, and performing a build function of the source program.

It will be apparent to those skilled in the technology that various modifications and variations can be prepared in the present invention. Thus, it is intended that the present invention covers the modifications and variations of this invention provided they come within the scope of the appended claims and their equivalents.

## Claims

1. A system for developing a target application on target system in a cross development environment having a host system and a target system, the development system comprising:
the target system having:
a storage device;
an input device;
an output device;
a source editing unit for creating, opening, editing, and saving a source program to the storage device; and
a project management client unit for performing a function of creating, opening, modifying, building, executing, and closing a project in association with the input device, the output device and the host system, and controlling data transmission/reception and information storage with respect to project information;
the host system having:
a storage device;
a cross compiling unit for building (cross-compiling and linking) the source program such that an executable program which can be executed at the target system is created to be saved to the storage device, and transmitting a message of a building result to the project management server unit; and
a project management server unit for storing the project information and the source program in the storage device of the host system in association with the target system, and performing a build function of the source program in association with the cross compiling unit,
whereby the application developer can develop the application in the target system.

2. The development system of claim 1, wherein the target system is provided for a portable device such that the source program can be developed and debugged even at a long distance from the host system.

3. A method for developing a target application on target system in a cross development environment having a host system and a target system, the development method comprising:
creating a project or opening a given project in the target system;
modifying the created or opened project;
building the modified project in the host system;
executing the built executable program in the target system; and
closing the project.

4. The development method of claim 3, wherein the project creating step comprises:
inputting project creation information through an input device of the target system by an application developer;
requesting a project management server unit of the host system whether or not the project exists, on basis of the inputted information;
outputting existence of the project through an output device of the target system by the project management client unit in case the project exists in the host system, and creating and storing project information in a storage device of the target system on basis of the project creation information in case the project does not exist; and
outputting the created project information through the output device of the target system by the project management client unit.

5. The development method of claim 3 or 4, wherein the project opening step comprises:
inputting project opening information through the input device of the target system by the application developer;
checking whether or not the project from the project opening information exists in the storage device of the target system by the project management client unit;
requesting the project information of the host system in the project management client unit in case the project does not exist;
reading the project from the project opening information received from the target system, and transmitting the read project information from the storage device of the host system to the target system, by the project management server unit of the host system;
storing the project information received from the host system in the storage device of the target system, by the project management client unit;
opening the project from the storage device of the target system according to the project opening information by the project management client unit; and
outputting the project information through the output device of the target system.

6. The development method of one of claims 3 to 5, wherein the project modifying step comprises:
modifying source, build and execution information included in the project information through the input device or the output device of the target system, by the application developer; and
editing the source program such as source program creation, edition and saving through the input device, the output device and the source editing unit and saving a content of the edited source program to the storage device of the target system, by the application developer.

7. The development method of one of claims 3 to 6, wherein the project building step comprises:
ordering a project build command through the input device of the target system by the application developer;
transmitting the project information and the edited source program to the host system and requesting a build, by the project management client unit of the target system;
storing the edited source program and the project information received from the target system in the storage device of the host system, by the project management server unit of the host system;
building the project in association with the cross compiling unit on basis of the project information and the source program of the storage device of the host system, by the project management server unit;
transmitting a build message and the built executable program to the target system, by the project management server unit; and
outputting the build message received from the host system through the output device of the target system and saving the built executable program to the storage device of the target system, by the project management client unit.

8. The development method of one of claims 3 to 7, wherein the project executing step comprises:
ordering a project execution command through the input device of the target system, by the application developer;
executing an executable program stored in the storage device of the target system, by the project management client unit; and
outputting the execution result through the output device of the target system, and checking the output result by the application developer.

9. The development method of one of claims 3 to 8, wherein the project closing step comprises:
ordering a project closing command through the input device of the target system, by the application developer;
storing the project information in the storage device of the target system, by the project management client unit;
transmitting the project information and the edited source program to the host system to request a project close;
storing the project information and the edited source program received from the target system in the storage device of the host system and informing the target system of the project close success, by the project management server unit;
outputting a message of the project close success through the output device of the target system, by the project management client unit; and
deleting the project information from the output device of the target system, by the project management client unit.
